# EUROPEAN PATENT APPLICATION

(11) **EP 4 838 733 A1**
(43) Date of publication of application: **11.11.2026**
(21) Application number: 25174697.0
(22) Date of filing: 07.05.2025
(51) Int. Cl.: H02J 1/10, H02J 1/14

(54) **METHOD FOR OPERATING BUILDING INFRASTRUCTURE DEVICES AND A SYSTEM THEREOF TO REDUCE THE OVERALL POWER LOSS**

(71) Applicant: Tridonic GmbH & Co. KG, 6851 Dornbirn (AT)
(72) Inventor: Romano, Fabio, 6851 Dornbirn (AT); Schneider, Miguel Philipp, 6851 Dornbirn (AT); Lochmann, Frank, 6851 Dornbirn (AT)
(74) Representative: Rupp, Christian

(57) **Abstract**

The invention is related to a method for operating a plurality of building infrastructure devices (DRV1, DRV2) of a building infrastructure system, wherein the plurality of the building infrastructure devices (DRV1, DRV2) are configured to commonly supply power to the at least one load (L1, L2), comprising the steps of supplying power, by the building infrastructure devices (DRV1, DRV2), to the at least one load (L1, L2), wherein for each of the plurality of building infrastructure devices (DRV1, DRV2) the respective amount of power supplied by a building infrastructure device is determined based on an overall power loss during power supply to the at least one load (L1, L2) caused by electrical connections connecting the building infrastructure devices (DRV1, DRV2) and the at least one load (L1, L2). The invention is also related to a system thereof.

## Description

This invention refers to a method for operating building infrastructure devices and a system thereof to reduce the overall power loss.

Within building infrastructure systems, common building structure devices are used to supply power to loads of the building infrastructure system. In particular, the building infrastructure system obtains its power from the mains network and the respective loads require specific voltage levels at which they may be connected. For instance, in such systems a 24 DC line or a 48 DC line is commonly used.

As an example, such a system may be a lighting system comprising LED's as loads and LED drivers as building infrastructure devices. In particular, such systems may include additional building infrastructure components as sensors, switches or the like.

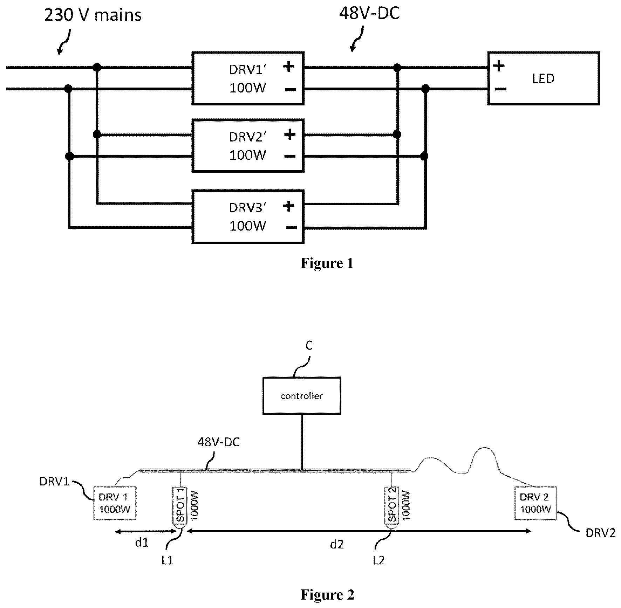

Sometimes the power supply is achieved by a plurality of building infrastructure devices that are electrically connected in parallel to commonly supply power to the at least one load that is connected to them. For instance, such building infrastructure devices are connected in parallel to the mains network on the input side of the building infrastructure devices and also in parallel to the at least one load on the output side of the building infrastructure devices as exemplarily shown in Figure 1. Doing so, the building infrastructure devices convert, for example, the 230 VAC of the mains network to e.g. 48 V DC to supply the at least one load. The power distribution is therefore evenly distributed between the building infrastructure devices. In the context of Figure 1, three separate building infrastructure devices supply a power of 100 W, adding up to 300 W that, such that the load is supplied with a power of 300 W.

Compared with a solution of just one building infrastructure device that supplies the required power, a plurality of advantages arise. As a first aspect, the maximum power that may be provided to the system is increased or, the other way round, the individual power that needs to be provided by single building infrastructure device is reduced. Moreover, such systems allow to incorporate redundancy which renders the system failure-proof. Additionally, maintenance of the system may be performed without affecting the system as e.g. the other building infrastructure devices that are not maintained in the meantime are still able to provide power to the system.

However, in more complex structures, the building infrastructure devices may be connected to the loads at arbitrary positions. For evenly distributing the output power among all the connected building this results in a rather disadvantageous operation. That is, the position is relevant in the context of the power loss caused by the electrical connections connecting the building infrastructure devices with the loads. Assuming an equal current that is supplied to a load, this results in a higher power loss for the building infrastructure devices that have a higher distance to the load. In consequence, this effect shows up for rather large lengths of the electrical connections as the power loss may sum up to a significant amount, which deteriorates the operation of the system. This is particularly relevant for low voltage systems (e.g. 24V, 48V) as high currents are required to satisfy the power demands. On the other side, by neglecting this effect, the potential to save power required for the power supply of the loads is being unused.

In order to overcome the above mentioned objective technical problems, this applications provides a method for operating building infrastructure devices of a building infrastructure system and a building infrastructure system according to the enclosed independent claims. The invention is defined in the appended claims. Advantageous features of the present invention are defined in the corresponding dependent claims.

Afirst aspect of the invention regards a method for operating a plurality of building infrastructure devices of a building infrastructure system, wherein the plurality of the building infrastructure devices are configured to commonly supply power to at least one load. The method comprises the steps of supplying power, by the building infrastructure devices, to the at least one load, wherein for each of the plurality of building infrastructure devices the respective supplied amount of power is determined based on a resulting overall power loss during power supply to the at least one load caused by electrical connections connecting the building infrastructure devices and the at least one load.

Building infrastructure devices are generally any devices that may provide power to loads within a building infrastructure system. Preferably, building infrastructure devices may be operating devices like drivers for LED's in lighting systems.

By common supply, the power and/or voltage and/or current supplied by each building infrastructure device adds up. Preferably, the power and is up by connecting the building infrastructure devices in parallel to one or more loads included in the system (see Figure 1 for reference).

The at least one load may be any load within the building infrastructure system. Preferably, the load is an LED. Alternatively, the load may be any other means for emitting light. Alternatively, the load may be a motor that drives shutters of windows or the like.

The respective amount of power supplied by a building infrastructure device is determined based on an overall loss for power supply to the at least one load caused by electrical connections connecting the building infrastructure devices and the at least one load. In other words, the power loss that would be caused by the electrical connections assuming a contribution of the respective building infrastructure device is taken into consideration for determining power contribution of the individual building infrastructure devices when finally supplying power to the loads. These power contributions are the respective amounts of power supplied by an individual building infrastructure device. For instance, for a first building infrastructure device it may be determined to supply a power of 200 W, whereas for a second one it may be determined to supply power of only 100 W, when determining the power supply distribution on the building infrastructure devices for supplying 300 W in total. If more building infrastructure devices are present, this determination is performed for all of them and the respective power values may vary as shown above in the example of two building infrastructure devices.

The overall power loss during power supply is understood to be a power loss by taking into consideration all electrical connections which contribute to the power loss. Preferably, in addition to the overall power loss, the power loss caused by the supply of power of a respective building infrastructure device is evaluated as well. By that, it is possible that a power loss is associated with a building infrastructure device. For example, one building infrastructure device is supplying a first current over the electrical connections and the second infrastructure device is supplying a second current over the electrical connections. Hence, it is preferable that also the power loss for the supply associated with one building infrastructure device is evaluated. This is advantageous for reasoning and optimization of the overall power loss as otherwise a random search for optimization the power loss, like trial and error approaches, would be required.

The power loss may be calculated, predicted, measured or the like. By calculating or predicting, the power loss may be determined in advance such that the results may be stored in a look up table. By measuring it could be determined the actual power loss based on the actual configuration, such that adaptations on the respective amount of power supplied by a building infrastructure device may be evaluated directly in the context of change of power loss.

The electrical connections are connecting the building infrastructure devices and the at least one load. For instance, such electrical connections may be cables. Alternatively, such connections may be integrated in a structure, like a rail system that is commonly used for attachment of LED luminaires. It should be noted that the type of electrical connection may vary across the connection from the building infrastructure device to the at least one load.

An advantageous effect of the foregoing embodiment is that the loss power may be reduced. Additionally, the robustness of the power supply may be increased.

In an embodiment of the method, the overall power loss additionally corresponds to a power loss during power supply to the at least one load caused by each of the plurality of building infrastructure devices.

The power loss caused by each of the plurality of the building devices is understood to be the internal power loss of a respective building infrastructure device. Namely, it is the difference of the power input, e.g. provided by a mains network and the power output that is used to supply the at least one load.

This internal power loss may be measured or predetermined by efficiency curves that were recorded for each respective building infrastructure device.

An advantageous effect of the foregoing embodiment is that the loss power may even be reduced even more. Additionally, the robustness of the power supply may be increased even more.

In an embodiment of the method, the method comprises the step of supplying power, by the building infrastructure devices, to the at least one load, wherein for each of the plurality of building infrastructure devices the respective amount of power supplied by a building infrastructure device is determined based on each length of the electrical connections between each of the building infrastructure devices and each of the supplied at least one load.

Preferably, the length of the electrical connection is mapped to a power loss. In particular, it is also required to know the electrical values like voltage and current across the electrical connection for this mapping.

This mapping may be a calculation. For instance, the resistance R of an electrical connection may be calculated as $R = \frac{ρ ∗ 2 ∗ L}{A} ,$ (1) wherein *ρ* denotes the specific resistance of the electrical connection that is dependent of the material, *L* denotes the length and the factor 2 takes care of the way to the load and back from the load, and A denotes the cable cross-section.

By knowledge of the resistance R the power loss of this electrical connection can be calculated as ${P}_{loss} = {I}^{2} ∗ R ,$ (2) wherein *I* denotes the current that flows through the electrical connection.

Based on this calculation, a configuration for the respective amounts of power for each of the building infrastructure devices may be determined, e.g. by simply calculating the configuration that yields the smallest power loss.

However, it is also possible to make a rule based approach which does not need the knowledge of the exact power loss. For instance, it could be determined that for lengths that exceed a certain threshold, the building infrastructure device is not used supply any power to the load.

Alternatively, also a machine learning based approach is possible, which is able to reduce the power loss when compared with an evenly distributed power supply system. For example, such a model could be trained to adapt the respective amounts of power for supply for each of the building infrastructure devices such that the power loss is reduced. An input value may be the length values for each building infrastructure device defining the length to the at least one load.

An advantageous effect of the foregoing embodiment is that the loss power may be obtained by or related to the rather simple measure of a length.

In an embodiment of the method, the method comprises the step of determining, by a determination module, a distance and/or the length of the electrical connections between a building infrastructure devices and a load for each possible pairs of building infrastructure devices and loads.

A distance is understood to be the Euclidian distance between a building infrastructure device and a load. Preferably, such a distance is determined based on time of flight (ToF) approaches as realizable by a UWB module. Therefore, the building infrastructure devices and the loads require UWB modules. Alternatively, the distance measurement may be performed by signal strength determination, like the RSSI value.

The length of the electrical connection may be determined based on time domain reflectometry. Alternatively, it may be possible to send a data package to a respective load and to wait for the response of the data package. The roundtrip time (except of the processing time by the load) may be used to calculate the distance when the velocity of the sent data package is known. The velocity is usually known by the cable parameters that are often predetermined.

An advantageous effect of the foregoing embodiment is that the system may obtain position relevant information, which may be related to the power loss.

In an embodiment of the method, the length of the electrical connections is determined based on a distance between each of the building infrastructure devices and each of the at least one load.

For instance, the distances may be used to determine positions of the building infrastructure devices and loads relative to each other. This may be achieved through triangulation. Based on the relative positions, the length of the electrical connection may be estimated by connecting the positions with straight lines, which is just an example.

Positions determined for the loads in an infrastructure system may be considered in combination with a known layout of the cabling or the rails of the lighting system in order to determine the lengths of paths between the building infrastructure devices and the respective loads that must be taken by currents provided by the building infrastructure devices.

The aforementioned distance measurement may be performed during commissioning of the lighting system. Alternatively or additionally, the distance measurement is initiated at specific scenarios. For instance, the distance measurement may be performed at night or especially at time periods at which presence of persons is not observed by e.g. a presence sensor or the like. Similar timings may be applied to the determination of the length of the electrical connections as well.

However, the positions may also be predetermined, e.g. by manual input into the building infrastructure system by a user. This user may be the commissioner of the lighting system.

It may be also possible to provide UWB modules at corners. By that, the above mentioned method by using straight lines to approximate the path of the connections yields even better results.

An advantageous effect of the foregoing embodiment is that the length does not need not be measured in order to determine it.

In an embodiment of the method, the method comprises the step of supplying power, by the building infrastructure devices, to the at least one load, wherein for each of the plurality of building infrastructure devices the respective amount of power supplied by a building infrastructure device corresponds to an amount of power at which the overall power loss is minimized.

As shown above in equation (2), the power loss may be calculated. This may serve as a basis to formulate an optimization problem, which can be solved in order to obtain the optimal set of power values. The power values may be used as the respective amount of power supplied by the respective building infrastructure devices. In consequence, the resulting power loss will be minimal. Note that equation (2) has to be extended as to include all possible losses due to the electrical connections. A simple example is shown later in this disclosure.

The optimization problem may be a multidimensional optimization problem. The optimization problem may be embedded into a machine learning architecture, such that known machine learning algorithms are used to minimize the power loss. Alternatively, simple regression models for multidimensional optimization may be used.

An advantageous effect of the foregoing embodiment is that the power loss may be reduced even more.

In the following, the system corresponding to the method is introduced, such that the indication of the advantageous effects is omitted for reasons of compactness. However, it should be noted that the aforementioned advantageous effects apply similarly to the system.

A building infrastructure system comprises at least one load and a plurality of building infrastructure devices. The plurality of building infrastructure devices are configured to commonly supply power to the at least one load; wherein the building infrastructure devices are configured to supply power to the at least one load, wherein for each of the plurality of building infrastructure devices the respective amount of power supplied by a building infrastructure device is determined based on an overall power loss during supply to the at least one load caused by electrical connections connecting the building infrastructure devices and the at least one load.

The building infrastructure system may additionally comprise actuators, sensors, controllers power supply systems, communication networks and the like. Preferably, such a building infrastructure system is a lighting system. The lighting system may particularly comprise sensors for presence detection, dimmers, switches and the like.

Preferably, the building infrastructure system comprises a central control that is configured to determine the respective amount of power supplied by a building infrastructure device based on the overall power loss. Additionally, the controller may be configured to determine the overall power based on the principles described in this disclosure.

In an embodiment, the overall power loss additionally corresponds to a power loss during power supply to the at least one load caused by each of the plurality of building infrastructure devices.

In an embodiment, the building infrastructure devices are further configured to supply power to the at least one load, wherein for each of the plurality of building infrastructure devices the respective amount of power supplied by a building infrastructure device is determined based on each length of the electrical connections between each of the building infrastructure devices and each of the supplied at least one load.

In an embodiment, the building infrastructure system comprises a determination module that is configured to determine a distance and/or the length of the electrical connections between each of the building infrastructure devices and each of the at least one load.

In an embodiment, the determination module is configured to determine the length of the electrical connections based on a distance between each of the building infrastructure devices and each of the at least one load.

The determination module is preferably realized by the central controller of the building infrastructure system.

In an embodiment, the building infrastructure devices are configured to supply power to the at least one load, wherein for each of the plurality of building infrastructure devices the respective amount of power supplied by a building infrastructure device corresponds to an amount of power at which the overall power loss is minimized.

In the following, preferred embodiments of the present application shall be described in more detail based on the corresponding figures.
Figure 1 is a schematic view of building infrastructure devices that commonly supply power to a load.
Figure 2 is a schematic view of a building infrastructure system according to an embodiment.
Figure 3 is a flowchart of a method.

Figure 1 is a schematic view of a building infrastructure devices DRV1', DRV2', DRV3' that commonly supply power to a load.

The building infrastructure devices DRV1', DRV2', DRV3' are connected to a mains network on one side while they are connected to a LED on the other side. The mains network is a 230V AC network. The 2030 V are internally converted to 48 V by the building infrastructure devices DRV1', DRV2', DRV3'.

Each building infrastructure device DRV1', DRV2', DRV3' is configured to supply a power of 100 W to the LED. In consequence, the LED is supplied by a power of 300 W.

Figure 2 is a schematic view of a building infrastructure system according to an embodiment.

The building infrastructure system comprises a first building infrastructure device DRV1, a second building infrastructure device DRV2, a controller C, LED L1 and LED L2. Moreover, the building infrastructure system comprises a 48 V DC line.

The building infrastructure device DRV1 or DRV2 may be any device that is configured to drive an LED. In particular, the building infrastructure device DRV1 or DRV2 are LED drivers. Such a driver may comprise the architecture of a flyback converter to convert an AC voltage to a DC voltage. Similar driver topologies as buck converters or the like are also possible. The illustrated power value of 1000W is understood to be the maximal output power of the drivers DRV1 and DRV2.

The controller may particularly be realized as a Central Processing Unit (CPU), a Graphics Processing Unit (GPU), a Field Programmable Gate Array (FPGA), an Application-Specific Integrated Circuit (ASIC), a Digital Signal Processor (DSP) or a Microcontroller (MCU).

The LED's L1 or L2 are preferably realized as LED spots. However they can be any type of luminaires.

The 48 V DC line may be realized as a copper wire that is partly attached on a rail system mounted on the ceiling of a room. In particular the drivers DRV1 and DRV2 are realized as to convert voltage from a mains network to 48 V DC as to realize the 48 V DC line. However, it may also be used separate drivers for realization of the 48 V DC line.

The controller C, the drivers DRV1 and DRV2 as well as the LED's L1 and L2 are connected to each other over the 48 V DC line. The 48 V DC line may be used to access power as well as to enable a wired communication between all connected components. In particular, the components may all be part of a communication network. Preferably, the communication network is a DALI network or the like.

The controller C preferably controls the drivers DRV1 and DRV2 as to provide control of the LEDs L1 and L2. For instance, drivers DRV1 and DRV2 may be used to provide a PWM signal to the LEDs L1 and L2 for dimming the light intensity.

In the following a method for operating the drivers DRV1 and DRV2 is explained for a simple example.

It is assumed that LED L2 is turned off. Hence, merely the LED 1 is configured to emit light.

The controller C may recognize that merely the power supply of LED 1 is to be controlled. In the example shown in Figure 2, the cable length d1 of driver DRV1 to the LED L1 amounts to 20 m, while the cable length d2 between driver DRV2 and LED L1 amounts to 40 m.

The cable length may be measured by the drivers DRV1 and DRV2 through an internal UWB module comprised in them. The LED L1 also comprises a UWB module. For instance, a ToF measurement may be performed by the drivers DRV1 and DRV2 to measure the distance between said components. Due to the linear structure of the lighting system, the length of the cable may be approximated by the measured distance.

Based on the knowledge of the cable length, the controller C may determine and optimize the overall power loss as shown in the following.

First, the controller C may determine the resistance of each cable path. The first path is a cable path from driver DRV1 to LED L1 and back to the driver DRV1 again. This resistance is referred to as *R*₁. In addition, a second path is a cable path from driver DRV2 to LED L1 and back to the driver DRV2 again. This resistance is referred to as *R*₂.

The resistances are calculated due to equation (1). For a cable cross section of *A* = 1.5 mm², a specific resistance ρ of $0.017 \frac{Ω ∗ {mm}^{2}}{m}$ for copper and the length d1 = 20 m and the length d2 = 40 m, equation (1) yields *R*₁ = 0,5 Ω and *R*₂ = 0,9 Ω.

The power loss is defined by equation (2), yet the overall power loss *P*_{overall loss} sums up the contribution of the losses *P*₁, *P*₂ in the first and second cable path given by $\begin{matrix}{P}_{overall loss} = {P}_{1} + {P}_{2} \\ = {\left(\frac{{P}_{DRV 2}}{48 V}\right)}^{2} ∗ 0.9 Ω + {\left(\frac{1000 W - {P}_{DRV 2}}{48 V}\right)}^{2} ∗ 0.5 Ω .\end{matrix}$ (3)

Generally each summand is based on equation (2). The value for the current *I* in equation (2) has been replaced by the ration of the power against the voltage by use of the well-known power relation *P* = *U* * *I.* It should be noted that irrespective of the supplied power, the line voltage is set to 48V. Moreover, as LED L1 merely requires 1000W, the commonly supplied powers of both drivers DRV1 and DRV2 may only sum up to 1000 W.

Equation (3) may now be derived after the supply power *P*_{DRV2} supplied by the driver DRV2. This derivation may be set to 0 to obtain the minimum of the overall power loss *P*_{overall loss}, which yields *P*_{DRV2} = 357.14 W and *P*_{DRV1} = 642.86 W.

It should be noted that this example neglected the fact that when this power is supplied to the LED L1, the power experiences a loss within the cable. This was done due to the increase of comprehensibility.

Thus, after the controller C has determined the optimal power configuration for both the drivers DRV1 and DRV2, it controls them to supply the respective amounts of power. Namely, driver DRV1 is controlled to supply 642.86 W and driver DRV2 is controlled to supply 357.14 W.

This example shows that an evenly distributed power supply of 500 W for both drivers DRV1 and DRV2 is not optimal in this case when considering the overall power loss.

The above mentioned procedure is just an example, and an optimization may include the supply of the LED L2 as well or even more LED's.

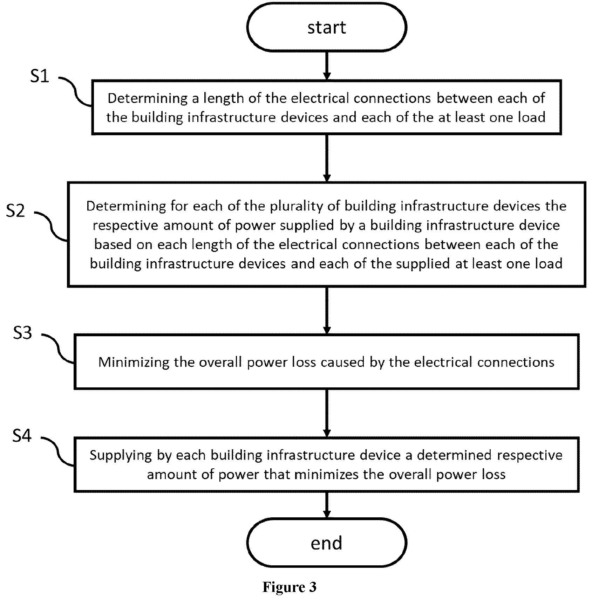

Figure 3 is a flowchart of a method.

The method is applicable to the system described above. Thus, all previously described functions and components are relevant for Figure 3 as well, yet a redundant description thereof is avoided.

It is shown a step S1 for determining a length of the electrical connections between each of the building infrastructure devices DRV1, DRV2 and each of the at least one load L1, L2.

It is shown a step S2 for determining for each of the plurality of building infrastructure devices DRV1, DRV2 the respective amount of power supplied by a building infrastructure device DRV1, DRV2 based on each length of the electrical connections between each of the building infrastructure devices DRV1, DRV2 and each of the supplied at least one load L1, L2.

It is shown a step S3 for minimizing the overall power loss caused by the electrical connections.

It is shown a step S4 for supplying by each building infrastructure device DRV1, DRV2 a determined respective amount of power that minimizes the overall power loss.

## Claims

1. A method for operating a plurality of building infrastructure devices (DRV1, DRV2) of a building infrastructure system, wherein the plurality of the building infrastructure devices (DRV1, DRV2) are configured to commonly supply power to the at least one load (L1, L2), comprising the steps of:
supplying (S4) power, by the building infrastructure devices (DRV1, DRV2), to the at least one load (L1, L2), wherein for each of the plurality of building infrastructure devices (DRV1, DRV2) the respective supplied amount of power is determined based on an overall power loss during power supply to the at least one load (L1, L2) caused by electrical connections connecting the building infrastructure devices (DRV1, DRV2) and the at least one load (L1, L2).

2. The method according to claim 1, wherein
the overall power loss additionally includes a power loss during power supply to the at least one load (L1, L2) caused by each of the plurality of building infrastructure devices (DRV1, DRV2).

3. The method according to claim 1 or 2, comprising the step of
supplying (S4) power, by the building infrastructure devices (DRV1, DRV2), to the at least one load (L1, L2), wherein for each of the plurality of building infrastructure devices (DRV1, DRV2) the respective supplied amount of power is determined based on lengths of the electrical connections between each of the building infrastructure devices (DRV1, DRV2) and each of the at least one load (L1, L2).

4. The method according to claim 3, comprising the step of
determining (S1), by a determination module, distances (d1, d2) and/or the lengths of the electrical connections between each of the building infrastructure devices (DRV1, DRV2) and each of the at least one load (L1, L2).

5. The method according to claim 4, wherein
the lengths of the electrical connections are determined based on distances (d1, d2) between the building infrastructure devices (DRV1, DRV2) and the supplied at least one load (L1, L2).

6. The method according to any one of the preceding claims, comprising the step of
supplying power (S4), by the building infrastructure devices (DRV1, DRV2), to the at least one load (L1, L2), wherein for each of the plurality of building infrastructure devices (DRV1, DRV2) the respective supplied amount of power corresponds to an amount of power at which the overall power loss is minimized.

7. A building infrastructure system, comprising:
at least one load (L1, L2); and
a plurality of building infrastructure devices (DRV1, DRV2) that are configured to commonly supply power to the at least one load (L1, L2); wherein
the building infrastructure devices (DRV1, DRV2) are configured to supply power to the at least one load (L1, L2), wherein for each of the plurality of building infrastructure devices (DRV1, DRV2) the respective supplied amount of power is determined based on an overall power loss during supply to the at least one load (L1, L2) caused by electrical connections connecting the building infrastructure devices (DRV1, DRV2) and the at least one load (L1, L2).

8. The building infrastructure system according to claim 7, wherein
the overall power loss additionally includes a power loss during power supply to the at least one load (L1, L2) caused by each of the plurality of building infrastructure devices (DRV1, DRV2).

9. The building infrastructure system according to any of the claims 7 to 8, wherein
the building infrastructure devices (DRV1, DRV2) are further configured to supply power to the at least one load (L1, L2), wherein for each of the plurality of building infrastructure devices (DRV1, DRV2) the respective supplied amount of power is determined based on lengths of the electrical connections between each of the building infrastructure devices (DRV1, DRV2) and each of the supplied at least one load (L1, L2).

10. The building infrastructure system according to claim 9, comprising
a determination module that is configured to determine distances (d1, d2) and/or the lengths of the electrical connections between each of the building infrastructure devices (DRV1, DRV2) and each of the at least one load (L1, L2).

11. The building infrastructure system according to claim 10, wherein
the determination module that is configured to determine the lengths of the electrical connections based on the distance (d1, d2) between each of the building infrastructure devices (DRV1, DRV2) and each of the at least one load (L1, L2).

12. The building infrastructure system according to claims 7 to 11**,** wherein
the building infrastructure devices (DRV1, DRV2) are configured to supply power to the at least one load (L1, L2), wherein for each of the plurality of building infrastructure devices (DRV1, DRV2) the respective supplied amount of power corresponds to an amount of power at which the overall power loss is minimized.
